# EUROPEAN PATENT APPLICATION

(11) **EP 3 453 506 A1**
(43) Date of publication of application: **13.03.2019**
(21) Application number: 17290116.7
(22) Date of filing: 11.09.2017
(51) Int. Cl.: B28B 19/00, B24C 1/00, B32B 7/12, B32B 13/00, H02S 20/26

(54) **METHOD OF MANUFACTURING A CONCRETE ELEMENT**

(71) Applicant: Holcim Technology Ltd, 8645 Jona (CH)
(72) Inventor: Horgnies, Matthieu, F-38291 Saint-Quentin-Fallavier Cedex (FR); Legrand, Fabienne, F-38291 Saint-Quentin-Fallavier Cedex (FR); Molines, Gérard, F-38291 Saint-Quentin-Fallavier Cedex (FR); Meunier, Laurent, F-38291 Saint-Quentin-Fallavier Cedex (FR); Dubois-Brugger, Isabelle, F-38291 Saint-Quentin-Fallavier Cedex (FR)
(74) Representative: Keschmann, Marc

(57) **Abstract**

In a method of manufacturing a concrete element having a functional layer, a rear side of the functional layer being bonded to the concrete element by means of an adhesive, the roughness of the rear side of the functional layer is increased by means of sand blasting, wherein the sand blasting is carried out for obtaining a surface roughness Ra of the rear side of the functional layer of between 1.5µm and 6µm.

## Description

The invention refers to a method of manufacturing a concrete element having a functional layer, a rear side of the functional layer being bonded to the concrete element by means of an adhesive, wherein the functional layer preferably is a photovoltaic layer.

Further, the invention refers to a concrete element obtainable by such a method.

Cities comprise various buildings and infrastructure (including transport) providing large surfaces, that it would be advantageous to use for providing additional functions, such as to produce electricity from solar energy, to provide electronic visual displays or to provide electromagnetic shielding. For this purpose, it becomes desirable to use concrete surfaces available on the many structures present in cities. However, the application of functional layers, such as solar panels on facades, or more generally on the concrete surfaces is time-consuming, costly and requires a large amount of manpower.

The application of photovoltaic layers on concrete has been disclosed in various documents, such as WO 2011/132143 A1, WO 2012/076491 A1, WO 2013/037792 A1, WO 2013/060477 A1, WO 2015/189096 A1 and WO 2017/051137 A1.

The known processes for applying a photovoltaic layer onto concrete comprise the application of an adhesive layer between the concrete surface and the photovoltaic layer. In particular, WO 2017/051137 A1 discloses a method comprising the steps of:
- increasing the roughness of the rear side of the functional layer by means of sand blasting,
- providing a mould,
- placing the functional layer at the bottom or at a side wall of the mould with the rear side facing the interior of the mould,
- applying an adhesive layer on the rear side surface of the functional layer,
- pouring fresh concrete into the mould, thereby at least partially covering the rear side of the functional layer with concrete,
- allowing the concrete to harden,
- demoulding the hardened concrete element.

Functional panels, such as photovoltaic panels integrated in concrete elements are directly exposed to the surrounding environment and are likely to age because of harsh weather conditions. Furthermore, contrary to traditional panels that can be easily removed and changed, when the panels integrated in concrete elements become an integral part of buildings, they become difficult to maintain and change.

There is therefore a need for concrete elements being provided with a functional layer, in particular with a photovoltaic panel, that are very durable. A critical element for the durability of concrete elements is in practice the quality of the adhesion of the functional layer onto the concrete support.

In order to improve the adhesion of a photovoltaic layer to the concrete, it has already been proposed in WO 2011/132143 A1, WO 2013/037792 A1, WO 2013/060477 A1 and WO 2015/189096 A1 to apply the adhesive layer on a very smooth surface of the concrete, such as a surface having a surface roughness Ra of below 1µm. However, few attempts have been made to improve the adhesion between the functional layer and the concrete by optimizing the bond between the adhesive layer and the functional layer.

Therefore, the instant invention aims at increasing the adhesion between the functional layer and the concrete so as to obtain concrete elements having an improved durability.

For this purpose, the present invention provides a method of manufacturing a concrete element having a functional layer, a rear side of the functional layer being bonded to the concrete element by means of an adhesive, wherein the roughness of the rear side of the functional layer is increased by means of sand blasting, wherein the sand blasting is carried out for obtaining a surface roughness Ra of the rear side of the functional layer of between 1.5µm and 6µm.

The inventors have found that a specific surface preparation by sand blasting the rear side of the functional layer prior to applying the adhesive and bonding the same to the concrete is able to achieve optimal adhesion and durability of the layered concrete element. In particular, it was shown that best results can be achieved, if the sand blasting is carried out for obtaining a surface roughness Ra of the rear side of the functional layer of between 1.5µm and 6µm.

Preparing the rear surface of the functional layer by sand blasting is an efficient and inexpensive method for increasing the roughness, but involves the risk of damaging the functional layer that in some embodiments can be very thin. The larger the particle size of the sand used for sand blasting is selected, the higher is the roughness that can be achieved, wherein a higher roughness increases mechanical interaction between the surface of the rear side of the functional layer and the adhesive and thus the strength of the adhesive bond. At the same time, using sand having a larger particle size, increases the risk of damaging the functional layer. The inventors have found that with a roughness Ra selected between 1.5µm and 6µm the bond between the adhesive layer and the functional layer can be optimized while safely avoiding damage to the functional layer, in particular to the rear side of the functional layer.

The term "rear side" as used herein denotes the side of the functional layer that faces the concrete element and that is bonded to the concrete element by means of the adhesive layer. Thus, the rear side is arranged opposite of the front side of the functional layer, wherein the front side is oriented towards the environment so as to be exposed to solar radiation in case the functional layer is configured as a photovoltaic layer.

The term "roughness" as used herein denotes a parameter of the surface topography and is quantified by the deviations in the direction of the normal vector of a real surface from its ideal form. The roughness of a given surface can be determined by measuring a number of parameters. In the description of the instant invention, the parameter Ra is used as measured by a confocal optical profilometer and as defined by the standards NF EN 05-015 and DIN EN ISO 4287 of October 1998, corresponding to the arithmetic average of all the ordinate of the surface profile within a base length.

The functional layer can be any kind of layer that is applied to the concrete element and that provides additional functions to the concrete element. In preferred embodiments, the functional layer may have photovoltaic properties. The layer having photovoltaic properties may be made of photovoltaic cells, such as crystalline silicon solar cells or thin film solar cells. In particular, the functional layer may be realized as a photovoltaic panel.

In some embodiments, the functional layer may have light emitting properties or light modulating properties. In particular, the functional layer may comprise or may be realized as an electronic visual display.

In other embodiments, the functional layer may have electromagnetic shielding properties. In this case, using the inventive concrete elements as building blocks allows the construction of buildings, the walls of which reduce, filter or block the penetration of electromagnetic radiation.

According to a preferred embodiment, the functional layer is a prefabricated element, that can be placed at the bottom or at a side wall of the mould. The functional layer may be a single-layer structure or a multiple-layer structure. Preferably, the functional layer comprises a carrier and a functional element arranged on the carrier, wherein the carrier forms the rear side of the functional layer and is made of a polymer, such as, e.g., polyolefins, polyethylene terephthalate, polyester, plastified polyvinyl chloride, polyamide.

The functional layer can be a rigid layer so as to be self-supporting. Alternatively the functional layer can be flexible. It has been found that an optimum durability of the layered concrete element can be achieved by selecting the roughness Ra of the rear side of the functional layer as a function of whether the functional layer is rigid or flexible.

Preferably, the functional layer is configured as a flexible layer and the sand blasting is carried out for obtaining a surface roughness Ra of the rear side of the functional layer of between 3 and 5.2µm.

Alternatively, the functional layer is configured as a rigid layer and the sand blasting is carried out for obtaining a surface roughness Ra of the rear side of the functional layer of between 1.6 and 3.4µm.

The adhesive used for bonding the rear side surface of the functional layer to the (fresh) concrete preferably is a polymer adhesive. According to a preferred embodiment of the invention the adhesive layer is an epoxy resin based adhesive, in particular a 2-component epoxy resin adhesive. The adhesive layer may be applied by spraying or brushing.

It has been found that good results can be obtained by applying the adhesive layer in a thickness of 0.5-1.5 mm, preferably 0.7-1.2 mm.

With regard to the sand blasting process, it was found that specific parameters of the sand blasting process can be adjusted so as to keep the surface roughness Ra of the rear side of the functional layer within the optimal range of 1.5µm and 6µm. According to a preferred embodiment, the sand blasting is carried out over a time period of 5 - 60sec.

Further, the sand blasting is preferably carried out by using compressed air having a pressure of 4bar - 8bar, preferably 5bar.

According to another preferred mode of operation the sand blasting is carried out at a blasting distance of 15 - 25cm, preferably 20cm.

In order to avoid damaging the functional layer when carrying out the sand blasting step, the sand blasting comprises using sand having a particle size distribution, which is characterized by a D90 of < 900µm, in particular < 700 µm.

Preferably, the sand blasting comprises using silica sand, in particular quartz sand, of medium grade according to ISO 14688-1:2002. Accordingly, the particle size of the sand is between 0.2 and 0.63mm.

Particular good results have been achieved with sand that has a particle size as uniform as possible. Preferably, the sand blasting comprises using silica sand, in particular quartz sand, having a particle size distribution, which is characterized by a D50 of 310µm and a D10 of 250µm.

Instead of silica sand, other types of sand may also be used. Preferably, the sand blasting comprises using sand of fine grade according to ISO 14688-1:2002, in particular sand essentially consisting of aluminum oxide crystals. Accordingly, the particle size of the sand is between 0.063 and 0.2mm. A preferred example of such a sand is "White Corundum F100" sand, which is essentially composed of crystals of aluminum oxide (99.7%) obtained by high temperature fusion of bauxite. Once ground, the sand grains are angular and shiny and have a high abrasion coefficient. Their hardness according to the Mohs scale is approx. 9.

When using fine sand, as mentioned above, it is advantageous that the sand blasting is carried out over a time period of > 25 sec, preferably > 45 sec.

A surface roughness Ra of between 1.5µm and 6µm may also be achieved with sand having larger particles. Accordingly, the sand blasting preferably comprises using sand having a particle size distribution, which is characterized by a D90 of > 900µm, in particular > 1200 µm. In particular, the sand blasting comprises using sand comprising > 80 wt.-% aluminum silicate crystals. A preferred example of such a sand is the product "Samenaz RUGOS 2000, 0.4-1.6 mm", which is produced from melted glass of aluminium silicate and is composed of hard and angular crystals of brown to topaz colour. This sand contains 50.8 wt.-% silica, 27.3 wt.-% alumina and 9.7 wt.-% iron oxide.

In order to avoid damaging the functional layer, the sand blasting is preferably carried out over a time period of < 10 sec, when using sand having a D90 of > 900µm, in particular > 1200 µm.

The term "concrete" as used herein is understood to define a mixture of a hydraulic binder (e.g. cement), aggregate, water, optionally additives, and optionally mineral additions. Generally, any type of concrete may be used within the scope of the instant invention, in particular any structural concrete that complies with the standard NF EN 1992-1-1 of October 2005. Structural concrete generally has a compressive strength measured at 28 days of greater than or equal to 12 MPa, in particular 12-300 MPa. Such a concrete can be used as a support structure in constructional work. A support structure is generally any element carrying more than its own weight, such as, e.g., pillars, posts, floors, walls, beams etc. Examples of concretes to be used are high performance concrete, ultra-high performance concrete, self-leveling concrete, self-compacting concrete, fiber reinforced concrete, ready-mixed concrete or colored concrete. Preferably, the concrete implemented in the process of the invention is a self-leveling concrete, i.e. a concrete that it is brought under the sole effect of the gravity without being vibrated.

The term "concrete" also comprises mortars. In this case, the concrete comprises a mixture of a hydraulic binder, sand, water, and optionally additives, and possibly mineral additions. The term "concrete" denotes indistinctly concrete in the fresh state and in the cured state, and also includes a cement slurry or mortar.

The term "concrete" also comprises earth-binder concrete, which is a mixture of earth, sand and a small amount of hydraulic binder.

The term "hydraulic binder" as used herein is understood to define a material, which sets by hydration, for example a cement.

According to an embodiment of the invention, the concrete is a high performance concrete (HPC) having a 28d compressive strength of > 80 MPa.

The HPC concrete may generally have a water/cement ratio (W/C) of up to 0.50, preferably at most 0.40, for example 0.15 to 0.40, more preferably from 0.20 to 0.35.

The HPC concrete may be a concrete containing silica fume.

The HPC concrete generally has a porosity to water of less than 20%, preferably less than 15%, for example less than 13% (determined by the method described in the report "Journées Techniques", AFPC-AFREM, December 1997, pages 121 to 124).

A high performance concrete generally has a resistance to compression at 28 days greater than 60 MPa and generally greater than 80 MPa. The functional layers according to the invention are preferably bonded to concrete elements produced from the high performance concretes.

The concrete preferably comprises, in parts by weight:
- 100 parts of Portland cement;
- 50 to 250 parts of a sand having a single grading with a D10 to a D90 of 0.063 to 5 mm, or a mixture of sands, the finest sand having a D10 to a D90 of 0.063 to 1 mm and the coarsest sand having a D10 to a D90 of 1 to 5 mm, for example between 1 and 4 mm;
- 50 to 200 parts of a sand having a single grading with a D10 to a D90 of 3 to 6 mm;
- 0 to 60 parts of a pozzolanic or non-pozzolanic material of particles or a mixture thereof having a mean particle size less than 15 µm;
- 0.1 to 10 parts of a water-reducing superplasticizer; and
- 15 to 40 parts of water.

According to a preferred embodiment of the invention, the concrete is a ultra-high performance concrete (UHPC) having a 28d compressive strength of > 100 MPa.

The UHPC concrete may generally have a water/cement ratio (W/C) of up to 0.50, preferably at most 0.32, for example 0.10 to 0.32, more preferably from 0.20 to 0.27.

The UHPC concrete may be a concrete containing silica fume.

The UHPC concrete generally has a porosity to water of less than 15%, preferably less than 12%, for example less than 10% (determined by the method described in the report "Journées Techniques", AFPC-AFREM, December 1997, pages 121 to 124).

A ultra-high performance concrete is a particular type of high-performance concrete and generally has a resistance to compression at 28 days greater than 100 MPa and generally greater than 120 MPa. The functional layers according to the invention are preferably bonded to concrete elements produced from the ultra-high performance concretes described in the US Patents 6478867 and 6723162 or European Patent Applications 1958926 and 2072481.

The concrete preferably comprises, in parts by weight:
- 100 parts of Portland cement;
- 50 to 200 parts of a sand having a single grading with a D10 to a D90 of 0.063 to 5 mm, or a mixture of sands, the finest sand having a D10 to a D90 of 0.063 to 1 mm and the coarsest sand having a D10 to a D90 of 1 to 5 mm, for example between 1 and 4 mm;
- 0 to 70 parts of a pozzolanic or non-pozzolanic material of particles or a mixture thereof having a mean particle size less than 15 µm;
- 0.1 to 10 parts of a water-reducing superplasticizer; and
- 10 to 32 parts of water.

The sand is generally a silica or limestone sand, a calcined bauxite or particles of metallurgical residues, and may also comprise a ground dense mineral material, for example a ground vitrified slag. A preferred mixture of sands comprises a mixture (preferably of two sands), the finest sand having a D10 to a D90 from 0.063 to 1 mm and the coarsest sand having a D10 to a D90 from 1 to 5 mm. The concrete according to the invention is preferably a self-placing concrete. It preferably has a Vicat setting time of 2 to 18 hours, for example 4 to 14 hours.

The high and ultra-high performance concretes generally exhibit a greater shrinkage on setting because of their higher cement content. The total shrinkage may be reduced by the inclusion of, in general from 2 to 8 parts, preferably from 3 to 5 parts, for example approximately 4 parts, of quicklime, overburnt lime or calcium oxide per 100 parts of the mixture before the addition of water.

Suitable pozzolanic materials comprise silica fume, also known under the name of microsilica, which is a by-product of the production of silicon or ferrosilicon alloys. It is known as a reactive pozzolanic material.

Its principal constituent is amorphous silicon dioxide. The individual particles generally have a size of approximately 5 to 10 nm. The individual particles agglomerate to former agglomerates of 0.1 to 1 µm, and then can aggregate together in aggregates of 20 to 30 µm. The silica fume generally has a specific surface area BET of 10 to 30 m²/g.

Other pozzolanic materials comprise materials rich in aluminosilicate such as metakaolin and natural pozzolans having volcanic, sedimentary or diagenic origins.

Suitable non-pozzolanic materials also comprise materials containing calcium carbonate (for example ground or precipitated), preferably a ground calcium carbonate. The ground calcium carbonate may for example be Durcal® 1 (OMYA, France).

The non-pozzolanic materials preferably have a mean particle size less than about 10 µm, preferably less than about 5 µm, for example 1 to 4 µm. The non-pozzolanic material may be a ground quartz, for example C800 which is a substantially non-pozzolanic silica filler material supplied by Sifraco, France.

The preferred specific surface area BET (determined by known methods) of the calcium carbonate or of the ground quartz is generally from 2 to 10 m²/g, generally less than 8 m²/g, for example 4 to 7 m²/g, preferably less than 6 m²/g.

Precipitated calcium carbonate is also suitable as non-pozzolanic material. The individual particles generally have a (primary) size of the order of 20 nm. The individual particles agglomerate in aggregates having a (secondary) size of approximately 0.1 to 1 µm. The aggregates themselves form clusters having a (ternary) size greater than 1 µm.

A single non-pozzolanic material or a mixture of non-pozzolanic materials may be used, for example ground calcium carbonate, ground quartz or precipitated calcium carbonate or a mixture thereof. A mixture of pozzolanic materials or a mixture of pozzolanic and non-pozzolanic materials may also be used. The concrete treated according to the invention may be reinforced by reinforcing elements, for example metal and/or organic fibers and/or glass fibers and/or other reinforcing elements for example as described below.

The concrete according to the invention may comprise metal fibers and/or organic fibers and/or glass fibers. The quantity by volume of fibers is generally from 0.5 to 8% relative to the volume of the hardened concrete. The quantity of metal fibers, expressed in terms of volume of the final hardened concrete is generally less than 4%, for example from 0.5 to 3.5%, preferably approximately 2%. The quantity of organic fibers, expressed on the same basis, is generally from 1 to 8%, preferably from 2 to 5%. The metal fibers are generally chosen from the group including steel fibers, such as high strength steel fibers, amorphous steel fibers or stainless steel fibers. The steel fibers may optionally be coated with a non-ferrous metal such as copper, zinc, nickel (or alloys thereof).

The individual length (1) of the metal fibers is generally at least 2 mm and is preferably 10 to 30 mm. The ratio 1/d (d being the diameter of the fibers) is generally from 10 to 300, preferably from 30 to 300, preferably from 30 to 100.

The organic fibers comprise polyvinyl alcohol (PVA) fibers, polyacrylonitrile (PAN) fibers, fibers of polyethylene (PE), high-density polyethylene (HDPE) fibers, polypropylene (PP) fibers, homo- or copolymers, polyamide or polyimide fibers. Mixtures of these fibers may be used. The organic reinforcing fibers used in the invention may be classified as follows: high modulus reactive fibers, low modulus non-reactive fibers and low modulus reactive fibers. The presence of organic fibers makes it possible to modify the behavior of the concrete in relation to heat or fire.

The individual length of the organic fibers is preferably from 5 to 40 mm, preferably from 6 to 12 mm. The organic fibers are preferably PVA fibers.

Suitable cements are the Portland cements without silica fume described in "Lea's Chemistry of Cement and Concrete". Portland cements include slag cements, pozzolanic, fly ash, burnt shale, limestone and composite cements. A preferred cement for the invention is CEM I (generally PM ES). The cement in the concrete according to the invention is for example white cement.

The water/cement weight ratio of the composition according to the invention may vary if cement substitutes, more particularly pozzolanic materials, are used. The water/binder ratio is defined as the weight ratio between the quantity of water E and the sum of the quantities of cement and of all pozzolanic materials: it is generally from 13 to 35%, preferably 15 to 32%, for example 15 to 30%, most preferably from 20 to 25%. The water/binder ratio may be adjusted by using for example water reducing agents and/or superplasticizers.

In the work "Concrete Admixtures Handbook, Properties Science and Technology", V.S. Ramachandran, Noyes Publications, 1984: a water reducer is defined as an additive that reduces the quantity of water of the mixture for a concrete for a given workability of typically from 10 to 15%. Water reducers comprise for example lignosulfonates, hydroxycarboxylic acids, carbohydrates, and other specialized organic compounds, for example glycerol, polyvinyl alcohol, sodium aluminomethylsiliconate, sulfanilic acid and casein.

Superplasticizers belong to a new class of water reducers, which are chemically different from the normal water reducers and capable of reducing the quantity of water of the mixture by approximately 30%. Superplasticizers have been classified generally into four groups: sulfonated naphthalene formaldehyde (SNF) condensate (generally a sodium salt); sulfonated melamine formaldehyde condensate (SMF); modified lignosulfonates (MLS) and others. New generation superplasticizers comprise polycarboxylic compounds such as polyacrylates. The superplasticizer is preferably a new generation of superplasticizer, for example a copolymer containing polyethylene glycol as graft and carboxylic functions in the main chain such as a polycarboxylic ether. Sodium polycarboxylate-polysulfonate and sodium polyacrylates may also be used. The quantity of superplasticizers generally required depends on the reactivity of the cement. The lower the reactivity of the cement, the lower the required quantity of superplasticizer. In order to reduce the total quantity of alkalis, the superplasticizer may be used as a calcium salt rather than a sodium salt.

Other additives may be added to the concrete mix, for example an anti-foam agent (for example a polydimethylsiloxane). Silicones may also be used in the form of a solution, a solid or preferably in the form of a resin, an oil or an emulsion, preferably in water. Preferred silicones comprise the characteristic groups (R⁴SiO 0.5) and (R⁴₂SiO).

In these formulae the radicals R⁴, which may be identical or different, are preferably hydrogen or an alkyl group having 1 to 8 carbon atoms, the methyl group being preferred. The number of characteristic groups is preferably from 30 to 120.

The quantity of such an agent in the composition is generally at most 5 parts per 100 parts by weight relative to the weight of the cement.

The concrete may be prepared by known methods, in particular by mixing the solid components and water, moulding and then setting and hardening.

According to an embodiment of the invention, the mould used for manufacturing the concrete element comprises a material such as silicone, polyurethane, steel, stainless steel, polypropylene, bakelized wood, polyoxymethylene or polyvinyl chloride. The mould preferably comprises polypropylene, polyoxymethylene or polyvinyl chloride.

Preferably, the concrete element is in the shape of a concrete slab having a thickness of 5-20 mm. The concrete element according to the invention will preferably be in the form of "thin elements", for example those having a ratio between the length and the thickness greater than approximately 8, for example greater than about 10, generally having a thickness of 10 to 30 mm.

The invention also relates to the use of a concrete element obtained by the method of the invention as a construction element.

The expression "construction element" means any element of a construction such as for example a floor, a screed, a foundation, a basement, a wall, a partition, a lining, a ceiling, a beam, a work surface, a pillar, a bridge pier, a building block, a building block made of aerated concrete, a tube, a pipeline, a post, a staircase, a panel, a cornice, a mould, a highway element (for example a curb), a tile, a covering (for example a road covering), a coating (for example for a wall), a facade panel, a plasterboard, an insulating element (e.g. sound and/or heat insulation).

In the present disclosure, including the claims, unless otherwise indicated, the percentages are indicated by weight.

In the present disclosure, including the claims, unless otherwise indicated, the particle size and the particle size distribution is obtained by applying the following measurement protocols.

D90 corresponds to the 90th percentile of the volume distribution of particle sizes, i.e. 90% of the volume consists of particles for which the size is less than D90 and 10% with a size greater than D90. D50 corresponds to the 50th percentile of the volume distribution of particle, i.e. 50% of the volume consists of particles for which the size is less than D50 and 50% with a size greater than D50. D10 correspond to the 10th percentile of the volume distribution of particle sizes, i.e. 10% of the volume consists of particles for which the size is less than D10 and 90% with a size greater than D10.

The D10, D50 and D90 of a sample of particles are determined by laser diffraction size measurement for particles with a size of less than 800 micrometers, or by screening using calibrated sieves for particles with a size of more than 63 micrometers.

The particle size distribution of powders is obtained using a laser Malvern MS2000 granulometer. The measurement is carried out in a suitable medium (for example, in an aqueous medium for powders that do not react with water). The size of the particles should be comprised from 0.02 µm to 2 mm. The light source consists of a red He-Ne laser (wavelength: 632 nm) and a blue diode (wavelength: 466 nm). The Fraunhofer optical model used for the computation of the particle size distribution is used, the computation matrix is of the polydisperse type. A measurement of background noise is initially carried out with a pump rate of 2000 rpm, a stirring rate of 800 rpm and a measurement of noise over a duration of 10 s, in the absence of ultrasonic waves. The light intensity of the laser is then of at least 80%, and a decreasing exponential curve is obtained for the background noise. If this is not the case, the lenses of the cell need to be cleaned.

A first measurement is then carried out on the sample with the following parameters: pump rate of 2000 rpm, stirring rate of 800 rpm, absence of ultrasonic waves, obscuration limit between 10 and 20%. The sample is introduced in order to have an obscuration slightly greater than 10%. After stabilization of the obscuration, the measurement is carried out for a duration between the immersion and the measurement set to 10 s. The measurement duration is of 30 s (corresponding to 30000 analyzed diffraction images). In the calculated particle size distribution, the fact that a portion of the population of the powder may be agglomerated is taken into account.

A second measurement is then carried out without emptying the tank, then sample now being subject to a ultrasonic waves treatment. This treatment is used to deflocculate the powder particles that may be agglomerated. The pump rate is brought to 2500 rpm, the stirring to 1000 rpm, the ultrasonic waves have a power of 30 Watts. This rate is maintained for 3 minutes, and then the initial parameters are set again: pump rate 2,000 rpm, stirrer rate of 800 rpm, absence of ultrasonic waves. After 10 s (for removing the possible air bubbles), a measurement is made during 30 s (corresponding to 30000 analyzed images). This second measurement corresponds to a powder de-agglomerated by ultrasonic dispersion.

Each measurement is repeated least twice. The apparatus is calibrated before each working session by means of a standard sample (Silica C10 Sifraco), the particle size curve of which is known. All the measurements shown in the description and the ranges correspond to the values obtained with ultrasonic waves.

The invention will be described in greater detail by means of the following examples.

### EXAMPLES

In the following examples, concrete elements having a functional layer, namely a photovoltaic layer, were produced according to the method of the invention.

### The following materials were used for producing the concrete:

The cement used is a cement of the CEM I 52.5N strength class, according to the classification given in EN 197-1 of February 2001.

The silica fume has a D50 of 1 +/-0.1 µm.

The components used for the preparation of ultrahigh performance concrete are:
(1) Portland cement: white cement produced at the Le Teil Lafarge plant in France, CEM I 52.5N
(2) Ground limestone filler: DURCAL® 1 supplied by Omya
(3) Silica fume: MST supplied by SEPR (Société Européenne des Produits Réfractaires)
(4) Sand: BE01 supplied by Sibelco France (Carrière Sifraco Bedoin)
(5) Admixture: Ductal® F2 supplied by Chryso (a polycarboxylate type water reducer)

The components used for the preparation of high performance concrete are:
(1) Portland cement: white cement produced at the Le Teil Lafarge plant in France, CEM I 52.5N
(2) Fly ash: CV Carling T6 supplied by Surschiste
(3) Sand 0/5 mm : Lafarge France, produced at St Bonnet La Petite Craz
(4) Gravel 3/6 mm : Lafarge France, produced at Cassis
(5) Admixture: Adva Flow 450 supplied by Grace Pieri

The components used for the preparation of the earth-binder concrete are:
(1) Pauzat earth
(2) Rammed earth 0/1 mm
(3) Sand 0/2 mm : Lafarge France, produced at St Bonnet La Petite Craz
(4) Sand 0/1,6 mm : Lafarge France, produced at Cassis
(5) Sand 1,6/3 mm : Lafarge France, produced at Cassis
(6) Sand 3/6 mm : Lafarge France, produced at Cassis
(7) Portland cement: CEM I 52.5N (according to the standard EN 197-1 of February 2001) produced at the Lafarge France cement plant of Saint Pierre La Cour

### Photovoltaic panels and adhesive:

The photovoltaic panels and the adhesive for bonding the panels to the concrete surface are all polymer based. The references of the materials used in the examples of this invention are:
(1) The rigid photovoltaic panels, with an epoxy matrix and using polycrystalline silicium: Solarmodul 4V/250mA, supplied by Conrad
(2) The flexible photovoltaic panels, with a ETFE base PVL-68 and using amorphous silica 12V/4.1A, are supplied by Solariflex
(3) The epoxy based glue is supplied by Chryso, and sold under the commercial name Chrysor C6123.

### Sand used for sand blasting:

The sand blasting of the rear side or the photovoltaic panels was done using 3 types of sand grains:
(1) quartz sand supplied by Sibelco France (Carrière Sifraco Bedoin) having a medium grade according to ISO 14688-1:2002
(2) Samenaz RUGOS 2000, 0.4-1.6 mm (http://www.semanaz.com) This sand is produced from melted glass of aluminium silicate , and is composed of hard and angular crystals of brown to topaz colour. The sand contains 50.8% silica, 27.3% alumina, and 9.7% iron oxide.
(3) White Corundum F100
   White Corundum F100 sand is essentially composed of crystals of aluminum oxide (99.7%) obtained by high temperature fusion of bauxite. Once ground, the sand grains are angular and shiny and have a high abrasion coefficient. Their hardness according to the Mohs scale is of 9.

### Concrete mix designs:

### Ultra-high performance concrete (UHPC):

The ultrahigh performance concrete used for producing the photovoltaic concrete panels of the present invention has the composition given in the table below.

| Component | Proportion (wt.-% of the entire composition) |
|---|---|
| CEM I 52.5N - White cement from Le Teil Lafarge plant in France | 31.0 |
| Ground limestone filler - DURCAL 1 | 9.3 |
| Silica fume - MST | 6.8 |
| Sand - medium grade | 44.4 |
| Total added water | 7.1 |
| Admixture - Ductal F2 | 1.4 |

The water cement ratio is 0.26 and the compressive strength after 28 days is above 100 MPa.

The components were mixed in a RAYNERI mixer at 20°C, and the mixing procedure was done according to the following steps: :
- at T = 0 seconds, the cement, limestone filler, silica fume and sand were added to the mixing bowl and mixed for a duration of 7 minutes at 15 rpm
- at T = 7 minutes, water and half the amount of admixture were added, and the composition was mixed for another minute at 15 rpm
- at T = 8 minutes, the rest of the admixture was added, and the composition was mixed for another minute at 15 rpm
- at T = 9 minutes, the mixer speed was set at 50 rpm, and the composition was mixed for another 8 minutes
- at T = 17 minutes, the mixer speed was set at 15 rpm, and the composition was mixed for another minute
- at T = 18 minutes, the concrete was poured into the moulds

### High performance concrete (HPC):

The high performance concrete used for producing the photovoltaic concrete panels of the present invention has the composition given in the table below.

| Component | Proportion (wt.-% of the entire composition) |
|---|---|
| CEM I 52.5N - White cement from Le Teil Lafarge plant in France | 21.75 |
| Fly Ash | 6.55 |
| Sand 0/5 mm | 38.57 |
| Gravels 3/6 mm | 26.4 |
| Total added water | 6.5 |
| Admixture - Adva Flow 450 | 0.23 |

The water cement ratio is of 0.30 and the compressive strength after 28 days is above 80 MPa.

The components were mixed in a RAYNERI mixer at 20°C, and the mixing procedure was done according to the following steep :
- at T = 0 seconds, the sand, gravels and pre-wetting water were added to the mixing bowl and mixed for a duration of 1 minute at 30 rpm ;
- at T = 1 minutes, sleeping period for a duration of 3 minutes and 45 seconds ;
- at T = 4 minutes 45 seconds, addition of the cement and fly ash during 15 seconds ;
- At T= 5 minutes, mixing for a duration of 1 minute at 30 rpm ;
- at T = 6 minutes, addition of the water and mixing for a duration of 30 seconds at 30 rpm ;
- at T = 6 minutes and 30 seconds, mixing for a duration of 90 seconds at 30 rpm ;
- at T = 8 minutes, mixing for a duration of 120 seconds at 40 rpm ;
- at T = 10 minutes, the concrete was poured into the moulds.

### Earth-binder based concrete:

The composition (1) of earth-binder mortar is described in the table below.

| Component | Proportion (wt.-% of the entire composition) |
|---|---|
| CEM I 52.5N - Saint Pierre la Cour | 11.0 |
| Sand 0/1,6 mm - Lafarge France (Cassis) | 36.0 |
| Sable 1,6/3 mm -Lafarge France (Cassis) | 15.0 |
| Sable 3/6 mm - Lafarge France (Cassis) | 18.0 |
| Rammed earth | 10.0 |
| Total water added | 10.0 |

The water cement ratio is 0.91. The earth-binder mortar according to composition (1) was prepared using a RAYNERI mixer at 20°C, and the mixing procedure was done according to the following steps:
- at T = 0 second, the cement, sands and the rammed earth were added to the mixing bowl and mixed for a duration of 3 minutes at 15 rpm
- at T = 3 minutes, the water was added, and the composition was mixed for another 2 minutes at 15 rpm
- at T = 5 minutes, the mixer was stopped and the bottom of bowl was scraped, for a duration of 30 seconds
- at T = 5 minutes and 30 seconds, the mixer was turned back on and the composition was mixed for another 2 minutes at 15 rpm

The composition (2) of earth-binder mortar is described in the table below.

| Component | Proportion (wt.-% of the entire composition) |
|---|---|
| CEM I 52.5N - Saint Pierre la Cour | 5.0 |
| Sand 0/2 mm - Lafarge France (St Bonnet) | 52.0 |
| Pauzat earth | 36.0 |
| Total water added | 7.0 |

The water cement ratio is 1.4. The earth-binder mortar according to composition (1) was prepared using a RAYNERI mixer at 20°C, and the mixing procedure was done according to the following steps:
- at T = 0 second, the cement, sands and the Pauzat earth were added to the mixing bowl and mixed for a duration of 3 minutes at 15 rpm
- at T = 3 minutes, the water was added, and the composition was mixed for another 2 minutes at 15 rpm
- at T = 5 minutes, the mixer was stopped and the bottom of bowl was scrapped, for a duration of 30 seconds
- at T = 5 minutes and 30 seconds, the mixer was turned back on and the composition was mixed for another 2 minutes at 15 rpm

### Casting procedure:

Panels were prepared by casting fresh concrete in wood moulds covered with Bakelite®, without addition of any demoulding agent. On the inner surfaces of the moulds, rigid, flexible or a combination thereof, of photovoltaic panels were positioned horizontally.

On the back of each photovoltaic panel, the epoxy-based adhesive was placed with a brush, and evenly spread with a comb. The thickness of the epoxy-based glue was about 1 mm, corresponding to between 400 and 900 g/m2 of adhesive, preferably between 400 and 600 g/m2 of adhesive relating to the rear side surface of photovoltaic panel.
The concrete was then poured into the moulds that contain the photovoltaic panels and the adhesive 15 minutes after the adhesive was spread with the comb.

In some cases, the rear side surface of the photovoltaic panel had been sand blasted beforehand. Different sand blasting procedures were tested, where the following parameters were tested:
- 3 durations of sand blasting were tested: 5, 30 and 60 seconds.
- 3 types of sand grains were tested as mentioned above
- the sand blasting was always done from a distance of 20 cm of the rear side surface of the photovoltaic panel,
- The pressure and airflow was constant, wherein compressed air at 5 bars was used.

The concrete panels were demoulded 18 hours after the concrete was casted and then subjected to the following accelerated testing procedures, in order to test the durability of the layered concrete element, in particular to study the durability of the adhesion between the concrete, the adhesive and the photovoltaic panels.

### Water condensation accelerated ageing test (QCT)

The test was carried out using a QCT condensation tester supplied by Q-Lab which simulates the damaging effects of outdoor moisture by condensing warm water directly onto test specimens. In a few days or weeks, the QCT tester can reproduce the damage due to moisture that occurs over months or years outdoors.

The specimens were positioned in a way to form a wall of the condensation chamber, at an inclination angle of 15°. Deionised water was heated to generate steam, wherein the steam filled the chamber in order to obtain 100% of relative humidity and a temperature of 38°C +/- 2°C. The specimens were positioned in such a way that a part was exposed to the environment of the chamber, and another part to ambient air. The temperature difference between the surface of the specimen and the atmosphere of the chamber caused water to condense continuously, and water to flow downwards on the surface of the specimen. The concrete-adhesive-solar panel specimen usually separates at the adhesive-solar panel interface.

### Freeze-thaw accelerated aging test

The specimens were stored in a freeze-thaw chamber to perform a 4-step cycle: (i) 45min at +9°C under water, (ii) decrease of temperature during 3h until -18°C, (iii) 35min at -18°C under air, (iv) increase of temperature during 40min until reaching +9°C.

The following example shows the results of the testing as a function of the sand blasting method used. The type of concrete is not mentioned, because the results were irrespective of whether the ultrahigh performance concrete (UHPC), the high performance concrete (HPC), or the earth-binder composition (1) or the earth-binder composition (2) was used. The first table indicates the results obtained when using flexible photovoltaic panels and the second table indicates the results obtained when using rigid photovoltaic panels.

### Results with flexible photovoltaic panels

Based on the results in the table below, the best sand blasting process for achieving optimal durability of the concrete photovoltaic panels of the invention was determined in having a surface roughness Ra of above 3.0µm and below 5.2µm. This was achieved by sand blasting for 5 seconds with the Semanaz RUGOS 2000 sand, 30 seconds with the quartz sand, or 60 seconds with the Corundum F100 sand.

Furthermore, sand blasting more than 30 seconds with the quartz sand did not significantly improve the surface roughness, nor the adhesion of the specimens after accelerated ageing. When the surface roughness was too high, such as 9.1 or above, the photovoltaic panels were structurally damaged.

| **Roughness Ra of the rear side of the photovoltaic panel after sand blasting [µm]** | **Sand blasting process (type of sand and duration)** | | **Adhesion of the concrete - adhesive - photovoltaic panel specimens after water condensation accelerated ageing** | **Adhesion of the concrete - adhesive - photovoltaic panel specimens after freeze thaw accelerating ageing** | **Damage visible on the rear surface of the photovoltaic panels after sand blasting** |
|---|---|---|---|---|---|
| 1.2 (+/-0.1) | Without sand blasting | | Poor adhesion, the photovoltaic panels peeled off after 1 day | Poor adhesion, the photovoltaic panels peeled off after 1 cycle | No |
| 4.9 (+/-0.3) | Semanaz RUGOS 2000 | 5 sec | Good adhesion, no peeling off after 1 month | Good adhesion, no peeling off after 150 cycles | No |
| 9.1 (+/-0.2) | Semanaz RUGOS 2000 | 30 sec | --- | --- | Yes |
| 10.7 (+/-0.8) | Semanaz RUGOS 2000 | 60 sec | --- | --- | Yes |
| 1.8 (+/-0.1) | Quartz sand | 5 sec | Poor adhesion, the photovoltaic panels peels off after 1 day | Poor adhesion, the photovoltaic panels peels off after 1 cycle | No |
| 3.4 (+/-0.4) | Quartz sand | 30sec | Good adhesion, no peeling off after 1 month | Good adhesion, no peeling off after 150 cycles | No |
| 4.2 (+/-0.4) | Quartz sand | 60 sec | Good adhesion, no peeling off after 1 month | Good adhesion, no peeling off after 150 cycles | No |
| 1.0 (+/-0.2) | Corundum F100 | 5 sec | Poor adhesion, the photovoltaic panels peels off after 1 day | Poor adhesion, the photovoltaic panels peels off after 1 cycle | No |
| 2.5 (+/-0.3) | Corundum F100 | 30 sec | Poor adhesion, the photovoltaic panels peels off after 1 day | Poor adhesion, the photovoltaic panels peels off after 1 cycle | No |
| 3.4 (+/-0.2) | Corundum F100 | 60 sec | Good adhesion, no peeling off after 1 month | Good adhesion, no peeling off after 150 cycles | No |

### Results with rigid photovoltaic panels

Based on the results in the table below, the best sand blasting process for achieving optimal durability of the concrete photovoltaic panels of the present invention consists in having a roughness Ra of above 1.6 µm and below 3.4 µm. This may be achieved by sand blasting for 5 seconds with the Semanaz RUGOS 2000 sand, 30 seconds with quartz sand, or 30 seconds with the Corundum F100 sand. When the surface roughness is too high, such as 9.1 µm or above, the photovoltaic panels are structurally damaged. Sand blasting with the Semanaz RUGOS 2000 sand for 30 seconds or more results in structural damages of the photovoltaic panels, and the measured roughness is of about 4.2.

| **Roughness of the back of the photovoltaic panel after sand blasting [µm]** | **Sand blasting process (type of sand and duration)** | | **Adhesion of the concrete - adhesive - photovoltaic panel specimens after water condensation accelerated ageing** | **Adhesion of the concrete - glue - photovoltaic panel specimens after freeze thaw accelerating ageing** | **Damage visible on the rear surface of the photovolta ic panels after sand blasting** |
|---|---|---|---|---|---|
| 0.4 (+/-0.2) | Without sand blasting | | Poor adhesion, the photovoltaic panels peels off after 1 day | Poor adhesion, the photovoltaic panels peels off after 1 cycle | No |
| 2.3 (+/-0.4) | Semanaz RUGOS 2000 | 5 sec | Good adhesion, no peeling off after 1 month | Good adhesion, no peeling off after 150 cycles | No |
| 4.4 (+/-0.2) | Semanaz RUGOS 2000 | 30 sec | --- | --- | Yes |
| 4.2 (+1-0,1) | Semanaz RUGOS 2000 | 60 sec | --- | --- | Yes |
| 1.2 (+/-0.3) | BE01 | 5 sec | Poor adhesion, the photovoltaic panels peels off after 1 day | Poor adhesion, the photovoltaic panels peels off after 1 cycle | No |
| 1.8 (+/-0.2) | BE01 | 30sec | Good adhesion, no peeling off after 1 month | Good adhesion, no peeling off after 150 cycles | No |
| 2.6 (+/-0.5) | BE01 | 60 sec | Good adhesion, no peeling off after 1 month | Good adhesion, no peeling off after 150 cycles | No |
| 1.0 (+/-0.1) | Corundum F100 | 5 sec | Poor adhesion, the photovoltaic panels peels off after 1 day | Poor adhesion, the photovoltaic panels peels off after 1 cycle | No |
| 2.4 (+/-0.3) | Corundum F100 | 30 sec | Good adhesion, no peeling off after 1 month | Good adhesion, no peeling off after 150 cycles | No |
| 3.0 (+/-0.4) | Corundum F100 | 60 sec | Good adhesion, no peeling off after 1 month | Good adhesion, no peeling off after 150 cycles | No |

## Claims

1. A method of manufacturing a concrete element having a functional layer, a rear side of the functional layer being bonded to the concrete element by means of an adhesive, comprising the steps of:
- increasing the roughness of the rear side of the functional layer by means of sand blasting,
- providing a mould,
- placing the functional layer at the bottom or at a side wall of the mould with the rear side facing the interior of the mould,
- applying an adhesive layer on the rear side surface of the functional layer,
- pouring fresh concrete into the mould, thereby at least partially covering the rear side of the functional layer with concrete,
- allowing the concrete to harden,
- demoulding the hardened concrete element,
wherein the sand blasting is carried out for obtaining a surface roughness Ra of the rear side of the functional layer of between 1.5µm and 6µm.

2. A method according to claim 1, wherein the functional layer is configured as a flexible layer and the sand blasting is carried out for obtaining a surface roughness Ra of the rear side of the functional layer of between 3 and 5.2µm.

3. A method according to claim 1, wherein the functional layer is configured as a rigid layer and the sand blasting is carried out for obtaining a surface roughness Ra of the rear side of the functional layer of between 1.6 and 3.4µm. wherein the functional layer comprises a carrier and a functional element arranged on the carrier, wherein the carrier forms the rear side of the functional layer and is made of a polymer, such as, e.g., polyolefins, polyethylene terephthalate, polyester, plastified polyvinyl chloride, or polyamide.

4. A method according to claim 1, 2 or 3, wherein the functional layer is a photovoltaic panel.

5. A method according to any one of claims 1 to 4, wherein the adhesive layer is applied onto the rear side of the functional layer so as to realize a layer thickness of 0.5 - 1.5mm, preferably 1mm.

6. A method according to any one of claims 1 to 5, wherein an epoxy resin based adhesive, in particular a 2-component epoxy resin adhesive, is used as said adhesive.

7. A method according to any one of claims 1 to 6, wherein the sand blasting is carried out over a time period of 5 - 60sec.

8. A method according to any one of claims 1 to 7, wherein the sand blasting is carried out by using compressed air having a pressure of 4bar - 8bar, preferably 5bar.

9. A method according to any one of claims 1 to 8, wherein the sand blasting is carried out at a blasting distance of 15 - 25cm, preferably 20cm.

10. A method according to any one of claims 1 to 9, wherein the sand blasting comprises using sand having a particle size distribution, which is **characterized by** a D90 of < 900µm, in particular < 700 µm.

11. A method according to any one of claims 1 to 10, wherein the sand blasting comprises using silica sand, in particular quartz sand, of medium grade according to ISO 14688-1:2002 (particle size between 0.2 and 0.63mm).

12. A method according to claim 11, wherein the sand blasting comprises using silica sand, in particular quartz sand, having a particle size distribution, which is **characterized by** a D50 of 310µm and a D10 of 250µm.

13. A method according to any one of claims 1 to 10, wherein the sand blasting comprises using sand of fine grade according to ISO 14688-1:2002), in particular sand essentially consisting of aluminum oxide crystals.

14. A method according to any one of claims 10 to 13, wherein the sand blasting is carried out over a time period of > 25 sec, preferably > 45 sec.

15. A method according to any one of claims 1 to 9, wherein the sand blasting comprises using sand having a particle size distribution, which is **characterized by** a D90 of > 900µm, in particular > 1200 µm.

16. A method according to claim 15, wherein the sand blasting comprises using sand comprising > 80 wt.-% aluminum silicate crystals.

17. A method according to claim 15 or 16, wherein the sand blasting is carried out over a time period of < 10 sec.

18. A method according to any one of claims 1 to 17, wherein the concrete is a ultra-high performance concrete (UHPC) having a compressive strength of > 100 MPa at 28 days, a high performance concrete (HPC) having a compressive strength of > 80 MPa at 28 days, or an earth-binder based concrete.

19. Concrete element having a functional layer, a rear side of the functional layer being bonded to the concrete element by means of an adhesive, wherein the construction element is obtainable by the method of any one of claims 1 to 18.

20. Use of a concrete element obtained by the method of any one of claims 1 to 18, as a construction element.
